# EUROPÄISCHE PATENTSCHRIFT

(11) **EP 4 346 493 B1**
(45) Veröffentlichungstag und Bekanntmachung des Hinweises auf die Patenterteilung: **08.07.2026**
(21) Anmeldenummer: 22730538.0
(22) Anmeldetag: 27.05.2022
(51) Int. Cl.: A43D 111/00

(54) **TRANSFERMODUL EINES BAUTEILS IN EINER PRODUKTIONSSTRASSE UND MIT SOLCHEN MODULEN AUSGESTATTETE PRODUKTFERTIGUNGSANLAGE**
TRANSFER MODULE OF A COMPONENT IN A PRODUCTION LINE AND PRODUCTION LINE EQUIPPED WITH SUCH MODULES
MODULE DE TRANSFERT D'UN COMPOSANT DANS UNE LIGNE DE PRODUCTION ET LIGNE DE PRODUCTION ÉQUIPÉE DE TELS MODULES

(30) Priorität: 28.05.2021 FR 2105609
(43) Veröffentlichungstag der Anmeldung: 10.04.2024
(73) Patentinhaber: Robert Bosch GmbH, 70442 Stuttgart (DE)
(72) Erfinder: BOULARAN, Christian, 12450 Luc -La Primaube (FR); JUILLAGUET, Patrick, 12850 ONET-LE-CHATEAU (FR); CARVALHO, Philippe, 12340 Rodelle (FR); GAYRARD, Patrick, 12510 DRUELLE BALSAC (FR); SALVAT, Mikael, 12450 La Primaube (FR)
(86) Internationale Anmeldenummer: PCT/EP2022/064465
(87) Internationale Veröffentlichungsnummer: WO 2022/248700

(56) Entgegenhaltungen:
- CN-A- 105 686 215
- US-A- 4 896 086
- US-A- 5 984 293
- US-A1- 2016 021 982
- US-B1- 6 799 757

## Beschreibung

### Gebiet der Erfindung

Die vorliegende Erfindung bezieht sich auf ein Transfermodul eines Bauteils in einer Produktionsstraße und eine Produktfertigungsanlage, die mit einer solchen Produktionsstraße ausgestattet ist.

### Stand der Technik

Es gibt Produktionsanlagen, insbesondere auf dem Gebiet der Schuhherstellung, die eine Produktionsstraße verwenden, die mit verschiedenen Fertigungsstationen ausgestattet ist und in der Transfermodule umlaufen, an denen Bauteile befestigt sind. Hierzu weisen Transfermodule Stifte auf, und die Bauteile sind mit Perforierungen versehen, die dem Platz der Stifte entsprechen, um von den Stiften auf dem Modul gehalten zu werden.

Diese Anlagen sind relativ komplex, da die Transfermodule für ein präzises Bauteil vorgesehen sind und nicht für verschiedene Bauteile dienen können, die zum Beispiel in einer Reihe von Bauteilen abgewandelt sind, deren Abmessungen variieren, wobei die Form gleichbleibt, um in dieser gleichen Produktionsstraße verarbeitet zu werden.

Dieser Nachteil ist besonders gravierend, da er die Herstellung von Modulen erfordert, die für jede besondere Form von Bauteilen vorgesehen sind.

Die Schrift US 2016/021982 A1 offenbart eine Pin-Platte als Vorrichtung zum Ausrichten von einem oder mehreren Materialien, um einen Gegenstand zu konstruieren.

Das Dokument US 5,984,293 A offenbart eine Vorrichtung zum Halten von gedruckten Leiterplattenbaugruppen in Fertigungsprozessen.

Die Schrift US 4,896,086 A, das als der nächstliegende Stand der Technik angesehen wird, offenbart ein Transfermodul für Bauteile, die durch Stifte auf dem Modul in Position gehalten werden, wobei das Modul ein passives Modul ist, das ein Gestell aufweist, das mit einer Fördereinrichtung kompatibel ist und eine Scheibe trägt, die mit Bezugspositionen versehen ist, von denen mindestens bestimmte mit versenkbaren Stiften ausgestattet sind, die zwischen einer unter die Oberfläche der Platte versenkten Position und einer von der Scheibe vorstehend ausgefahrenen Position beweglich sind, um das auf der Scheibe zu haltende Bauteil zu empfangen, wobei die Scheibe mit Bohrungen an den Bezugspositionen versehen ist, wobei die Stifte in einem Block eingebaut sind, wobei die Stifte zwischen einer ersten und einer zweiten Position im Block beweglich sind, mit Rückhalt in jeder Position durch eine Einklipsvorrichtung .

### Ziel der Erfindung

Die vorliegende Erfindung hat zum Ziel, ein Transfermodul zu entwickeln, das an verschiedene Bauteiltypen anpassbar ist, um die Bauteile an Stiften zu befestigen und ihren Transfer zu den verschiedenen Stationen der Produktionsstraße zu ermöglichen.

### Offenbarung und Vorteile der Erfindung

Zu diesem Zweck hat die Erfindung ein Transfermodul für Bauteile zum Gegenstand gemäß Anspruch 1, die durch Stifte auf dem Modul in Position gehalten werden und in einer Produktionsstraße umlaufen, die mit Arbeitsstationen ausgestattet ist, wobei dieses Modul dadurch gekennzeichnet ist, dass es eine Scheibe aufweist, die mit Bezugspositionen versehen ist, von denen mindestens bestimmte mit versenkbaren Stiften ausgestattet sind, die zwischen einer unter der Oberfläche der Scheibe versenkten Position und einer über die Scheibe vorstehend ausgefahrenen Position beweglich sind, um das auf der Scheibe zu haltende Bauteil zu empfangen.

Dieses Transfermodul hat viele Vorteile gegenüber bekannten Transfermodulen mit Scheibe, die mit ortsfesten Noppen versehen sind, da es eine sehr flexible Anpassung für die Diversifizierung einer Produktionsstraße ermöglicht. Das erfindungsgemäße Transfermodul verringert die Anzahl von abhängig von den Bauteiltypen, die auf der Scheibe eines Moduls zu befestigen sind, zu lagernden Modulen, da die Module in einer Produktionsstraße nicht ausgetauscht werden müssen. Das Modul ist sehr effizient, da es leicht von Fertigungsresten befreit werden kann, um sofort wiederverwendet zu werden.

Die Einfachheit des Moduls für seinen Einsatz trotz der sehr großen Diversität und Möglichkeit ergibt sich daraus, dass das Modul passiv ist; es weist weder Motor noch Stellantrieb auf, und erfordert daher keinen Anschluss für seine Stromversorgung.

Gemäß einem anderen Merkmal sind die Bezugspositionen gemäß einem Gitter mit Koordinaten verteilt, die jede Position und ihre mögliche Besetzung durch einen versenkbaren Stift markieren. Dies ermöglicht eine sehr große Diversifizierung der Bezugspunkte und garantiert gleichzeitig die Präzision der Steuerung der Aktivierung der Platte.

Erfindungsgemäß wird die Scheibe von einer Platine gebildet, die mit Bohrungen an den Bezugspositionen und einer wabenförmigen Basis versehen ist, deren Vertiefungen den Bohrungen der Bezugspositionen der Platine entsprechen, wobei die ausgewählten Vertiefungen versenkbare Stifte aufweisen, die in die Bohrungen der Platine eingeführt sind.

Dieses erfindungsgemäße Modul kann leicht durch die Änderung der Anzahl von Bezugspunkten und von Blöcken sowie ihrer Stellen angepasst werden. Es genügt, die Scheibe vom Träger auszubauen, um zu den Blöcken und den sie empfangenden Vertiefungen zu gelangen, um die Blöcke umzustellen, zu entfernen oder hinzuzufügen.

Erfindungsgemäß ist der versenkbare Stift in einen Block integriert, der in einer Vertiefung der Basis der Scheibe untergebracht ist, und der Block von der Tragplatte des Gestells gehalten wird, das mit Bohrungen oder Öffnungen versehen ist, die den Zugang zum Kolben des Blocks ermöglichen, der in einer Vertiefung platziert ist.

Erfindungsgemäß ist der Block ein Zylinder, der einen mit einem Stift versehenen Kolben empfängt, wobei der Kolben im Zylinder zwischen einer ersten und einer zweiten Position beweglich ist, indem er in jeder Position von einer Haltevorrichtung gehalten wird.

Das Transfermodul ist dadurch besonders einfach und zuverlässig.

Erfindungsgemäß ist die Haltevorrichtung eine Einklipsvorrichtung, um mit dem Kolben in seiner versenkten Position oder in seiner zurückgezogenen Position zusammenzuwirken.

Diese Art des Halts ist geschmeidig und leicht zu steuern, insbesondere, wenn die Einklipsvorrichtung aus einer Kugel kombiniert mit einer Feder und aus zwei Rillen in der Oberfläche des Zylinders besteht, wobei diese Rillen der einen bzw. der anderen Position des Kolbens zugeordnet sind, wobei die Feder die Kugel in eine von der Fläche des Zylinders vorspringende Position schiebt, um in die Rille des Kolbens zu kommen, der gegenüber der Kugel angekommen ist, wobei diese Kugel unter der Wirkung eines vom Kolben auf die Kugel ausgeübten Schubs zurückgeschoben werden kann, um sich hinter die Fläche des Zylinders zu versenken, und die Feder komprimiert und die Freigabe des Kolbens ermöglicht.

Gemäß einem anderen Merkmal ist die Platine eine Stahlplatte, deren Oberfläche nicht-reflektierend ist und die durch eine wärmeisolierende Platte von der Basis getrennt wird. Diese Platine, die die Stifte empfängt, ermöglicht es, sie gut in ausgefahrener Position zu halten. Sie hält mechanische Einwirkungen aus und verhindert die zufälligen Spiegelungen eines möglichen Laserstrahls, der für einen am Bauteil ausgeführten Vorgang verwendet wird.

Die Erfindung hat ebenfalls eine Produktfertigungsanlage zum Gegenstand, die eine Produktionsstraße mit Arbeitsstationen und Fördereinrichtungen enthält, die zwischen den Arbeitsstationen umlaufen und Module transportieren, die in den Stationen zu verarbeitende Bauteile tragen, wobei diese Module wie oben definiert sind.

In dieser Anlage finden sich alle Vorteile der Einfachheit der Funktionsausführung und der Zuverlässigkeit der Transfermodule wieder.

Gemäß einem anderen Merkmal enthält die Anlage eine Verwaltungseinheit, die die Bewegung der Fördereinrichtungen und die in der Station gemäß einem definierten Programm ausgeführten Vorgänge steuert. Diese Verwaltungseinheit garantiert die Funktionsflexibilität der Anlage und die Diversifizierung der in einer gleichen Anlage mit den gleichen Transfermodulen möglichen Vorgänge.

Gemäß einem anderen Merkmal enthält die Anlage eine Aktivierungsvorrichtung des Transfermoduls, um die Blöcke zu betätigen und ihren Stift entsprechend dem auf dem Modul zu empfangenden Bauteil auszufahren.

Gemäß einem anderen Merkmal besteht die Aktivierungsvorrichtung aus zwei Längsschienen, die eine Empfangsstelle einer Scheibe umranden und eine Querschiene tragen, die mit einem Querschlitten versehen ist, der mit einem Stellantrieb ausgestattet ist, um zur ausgewählten Position eines Bezugspunkts zu kommen, um seinen Kolben zu schieben und den Stift des Blocks aus diesem ausgewählten Bezugspunkt auszufahren.

Diese Aktivierungsvorrichtung ist trotz der großen Anzahl von für Bezugspunkte möglichen Positionen einfach zu steuern.

Gemäß einem anderen Merkmal wird in der Aktivierungsvorrichtung die Querschiene von zwei Längsschlitten getragen, die auf den Längsschienen durch ein Schraube-Mutter-Getriebe synchron angetrieben werden, das jedem Schlitten und seiner Längsschiene zugeordnet ist und von einem Motor und einer mit den zwei Schrauben verbundenen Querwelle angetrieben wird, wobei der Querschlitten von einem Schraube-Mutter Getriebe angetrieben wird, das in die Querschiene integriert ist und von einem von der Querschiene getragenen Motor betätigt wird.

Diese Ausführung der Aktivierungsvorrichtung ermöglicht es insbesondere, die Querschiene und somit die Stellantriebe zu teilen, um die Bewegungen der Aktivierungsvorrichtung und somit die Zeit zu verringern, die für die Aktivierung der Scheibe eines Moduls notwendig ist.

Gemäß einem anderen Merkmal enthält die Anlage eine Ausgabestation, die aus einer Entnahme- und Reinigungsstation besteht, die einen Portalrahmen mit einer Schiene hat, die das Transfermodul überdeckt, das in der Ausgabestation angekommen ist, und mit einem Schlitten versehen ist, der mit einer Greifvorrichtung stromaufwärts und einer Reinigungsvorrichtung stromabwärts ausgestattet ist, um die Greifvorrichtung über dem Transfermodul zu platzieren und das Produkt zu entnehmen, und sich dann zu verschieben, um das Produkt auszugeben und gleichzeitig die Reinigungsvorrichtung bei ihrem Durchgang über dem leeren Transfermodul zu aktivieren, um es zu reinigen.

Diese Ausführung ist einfach und effizient.

Gemäß einem anderen Merkmal weist die Greifvorrichtung in der Anlage einen Greifkopf mit mit Unterdruck versorgten Saugnäpfen auf, und die Reinigungsvorrichtung enthält eine mit Druckluft versorgte Luftdüse.

Eine solche Greifvorrichtung ist wie die Diversifizierung der Produktionsanlage; sie passt sich vielseitig an viele Formen der Produkte an, die nicht unbedingt eben sind.

Gemäß einem anderen vorteilhaften Merkmal besteht die Vorrichtung zum Versetzen der Anlage in den Anfangszustand, um die ausgefahrenen Stifte der Scheibe zu versenken, aus einer Platte, um alle Stifte einer Scheibe bis in die Ebene der Oberseite der Scheibe des Transfermoduls zurückzuschieben.

Diese Ausführung ist besonders einfach.

### Kurze Beschreibung der Zeichnungen

Die vorliegende Erfindung wird nachfolgend mit Hilfe einer Ausführungsform eines Transfermoduls und einer mit solchen Transfermodulen ausgestatteten Produktionsstraße ausführlicher beschrieben:
[Fig. 1] schematische Darstellung einer mit Transfermodulen ausgestatteten Produktionsstraße,
[Fig. 2] Draufsicht eines Transfermoduls,
[Fig. 3] Ansicht in vergrößertem Maßstab eines Querschnitts des Transfermoduls der Figur 2,
[Fig. 4A] Schnittansicht eines Blocks in Ausfahrposition des Stifts,
[Fig. 4B] Schnittansicht des Blocks in Zwischenposition,
[Fig. 4C] Schnittansicht des Blocks in zurückgezogener Position des Stifts,
[Fig. 5] Schnittansicht in vergrößertem Maßstab einer Scheibe mit einem ausgefahrenen Stift und einem versenkten Stift,
[Fig. 6] perspektivische Ansicht eines Moduls mit einer Scheibe, deren Stifte ausgefahren sind,
[Fig. 7] perspektivische Ansicht einer Aktivierungsvorrichtung eines Transfermoduls,
[Fig. 8] Vorderansicht der Aktivierungsvorrichtung der Figur 7,
[Fig. 9] Vorderansicht der Ausgabestation.

### Beschreibung einer Ausführungsform

Die Erfindung hat ein Transfermodul 1 der Bauteile zum Gegenstand, um Produkte auf einer Produktionsstraße LP zu fertigen, die mit Arbeitsstationen OP1-OP3 ausgestattet ist, um die Bauteile vom Eingang der Straße zur Ausgabe der Produkte zu transferieren.

Um die Beschreibung zu vereinfachen, wird vereinbart, dass ein herzustellendes Produkt eines oder mehrere Bauteile erfordern kann, die hier durch den Ausdruck « das Bauteil » abgedeckt sind. Das Bauteil ist ein Element, das zur Fertigung des Produkts gehört, oder mittels Bearbeitung durch Schneiden, Verformung, chemische Wirkung oder anderes umgewandelt wird, um das Produkt zu erhalten.

Aufgrund der Diversität der zwei- oder dreidimensionalen Formen, die es haben kann, ist das Bauteil nicht dargestellt.

Die Erfordernis, der die Erfindung entspricht, ist es, das Bauteil am Eingang der Produktionsstraße LP präzise auf einem Modul 1 zu positionieren, damit es in einer präzisen Position in einer Station OP1-OP3 ankommt, damit die Vorgänge ausgeführt werden können.

Das herzustellende Produkt kann ein fertiges oder halbfertiges Produkt sein, das dann ein Bauteil bildet, das in einer anderen Produktionsstraße verwendet wird.

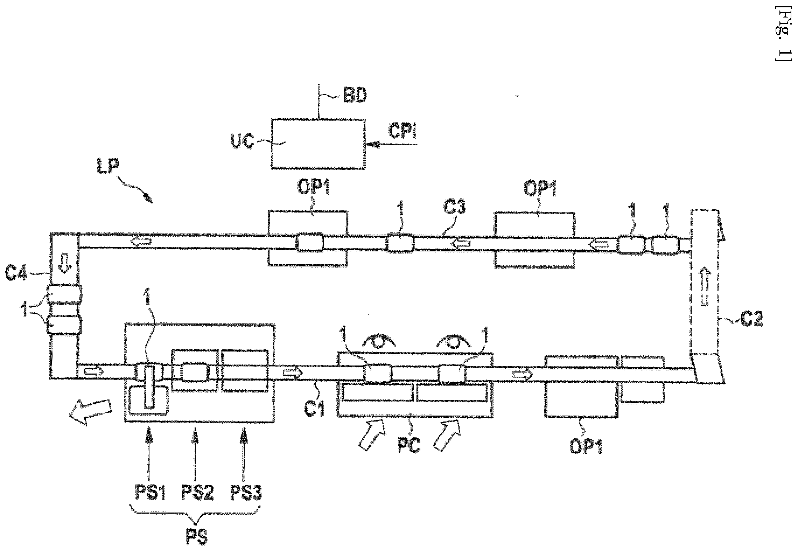

Eine Produktionsstraße LP ist in Figur 1 dargestellt. Sie besteht aus Fördereinrichtungen C1-C4, die die Module 1 zwischen der Ladestation PC des Bauteils auf ein Modul 1 verschieben, dann dem Übergang in die betriebsbereiten Stationen OP1...OP3, die die verschiedenen Vorgänge ausführen, um zum Produkt zu gelangen.

Am Straßeneingang wird das Bauteil in einer präzisen Position auf dem Transfermodul 1 in der Ladestation PC installiert.

Am Straßenende kommt das Modul 1 in der Ausgabestation PS an, in der:
- das Produkt 1 vom Modul 1 entnommen wird (PS1),
- das Modul 1 gereinigt wird (PS2), und
- das Modul zurückgesetzt wird (PS3), um bereit zu sein, zur Ladestation PC zurückzukehren.

Die Produktionsstraße LP ist einem Kreis gleichstellbar, der die Ausgabestation PS mit dem Eingang verbindet, der eine Ladestation PC ist. Dieser Kreis kann eine Abzweigung haben, um durch Arten von Weichenverbindungen abhängig von den Erfordernissen der Vorgänge und vom Strom von notwendigen Modulen Module 1 zu entnehmen oder einzuführen.

Die verschiedenen automatischen oder manuellen Bewegungen und Vorgänge werden von einer Zentraleinheit UC verwaltet, die die Signale von Sensoren CPi und die Informationen einer Datenbank 3D verwendet, um die Bewegungen und die Vorgänge zu steuern. Diese Vorgänge können von einem Modul 1 zum anderen benutzerangepasst sein oder auch in Gruppen von Modulen gleich sein oder durch Reihen von Modulen vereinheitlicht werden.

Die verschiedenen Arten des Ladens eines Moduls 1 können von einem Transfermodul zum anderen auf der Produktionsstraße variieren und die Anpassung des oder der Module erfordern.

Diese Anpassungs- und Funktionsflexibilität wird durch die Anpassungsmerkmale der Transfermodule 1 und ihre Verwaltung erlaubt.

Genauer gesagt, werden die Bauteile von Transfermodulen 1 zwischen dem Eingang PC und der Ausgabe PS der Produktionsstraße LP getragen, mit Rückkehr der Transfermodule 1, die in einem Kreis umlaufen. Die Module 1 werden von Fördereinrichtungen C1-C4 transportiert, die die verschiedenen Stationen (OP1, OP2, OP3, PS, PC) durchqueren, endlos oder im Start/Stopp-Modus mit möglichem Zurückhalten der Module 1 in der einen oder anderen Station, abhängig von den Vorgängen.

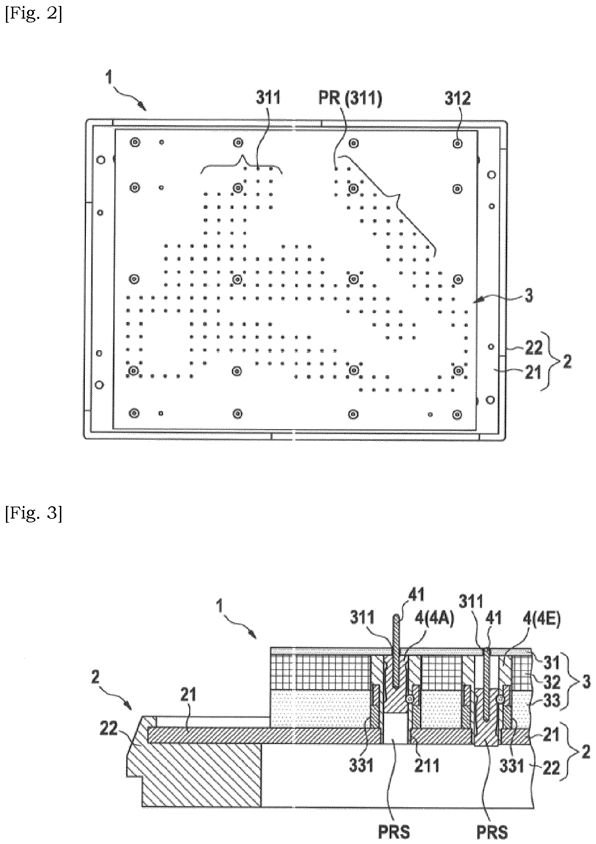

Figur 2 ist eine Draufsicht eines Transfermoduls 1 gemäß der Erfindung, und Figur 3 seine vergrößerte Teilschnittansicht.

Das Transfermodul 1 besteht aus einem Gestell 2, insbesondere Standard, kompatibel mit den Fördereinrichtungen C1-C4, die selber Standard sind. Das Gestell 2 trägt eine Scheibe 3 bestehend aus einer Basis 33, die von einer Platine 31 bedeckt wird, ggf. mit Zwischenfügung einer wärmeisolierenden Zwischenplatte 32.

Die Scheibe 3 empfängt das Bauteil und hält es in einer präzisen Position, die es ermöglicht, die verschiedenen Vorgänge in den Stationen OP1-OP3 der Produktionsstraße LP auszuführen.

Das Gestell 2 besteht aus einer Tragplatte 21 verbunden mit einem Gleitstück 22 für den Transport des Moduls. Die Tragplatte 21 empfängt die Scheibe 3, zu der sie gehört, wie nachfolgend erläutert wird.

Die Platine 31 ist eine Platte mit einer Verteilung von Bezugspunkten PR, zum Beispiel gemäß einem gleichmäßigen Raster oder gemäß Gruppen von Bezugspunkten PR, die durch Bohrungen 311 materialisiert werden, für den Durchgang der versenkbaren Stifte 41, die in die Dicke der Scheibe 3 integriert sind. Die Scheibe 3 wird zum Beispiel durch Schrauben 312 an der Tragplatte 33 befestigt.

Gemäß diesem Beispiel besteht die Scheibe 3 aus einer Platine 31 aus Stahl, deren Oberfläche nicht reflektierend ist, um die Reflexion der Strahlung, zum Beispiel im Fall eines Vorgangs unter Verwendung eines Laserstrahls, auf die Produktionsstraße zu vermeiden.

Die Platine 31 ist mit der Basis 33 durch eine wärmeisolierende Zwischenplatte 32 verbunden, die die Wirkung der Wärmeleitung der Platine zum Kern der Platte 3, insbesondere zu den Blöcken 4, aufhebt.

Im einfachsten allgemeinen Fall sind die Bezugspunkte PR Bohrungen 311, die gemäß einem orthonormierten Gitter verteilt und durch ihre Koordinaten markiert sind.

Die Bezugspunkte PR stellen mögliche Befestigungspunkte des Bauteils an der Scheibe 3 dar. Abhängig von seiner Form und seiner Bestimmung wird das Bauteil an einer bestimmten Anzahl ausgewählter Bezugspunkte PRS unter der Gesamtheit möglicher Bezugspunkte PR befestigt, die auf der Platine 31 vorgesehen sind.

Im besonderen Fall von Anlagen, die für einen Fertigungstyp vorgesehen sind, kann die Platine 31 abhängig von der allgemeinen Form der zu empfangenden Bauteile nur eine begrenzte Anzahl von Bezugspunkten PR haben.

In dem einen oder anderen Fall werden die Bezugspunkte PR ausgewählt und empfangen einen versenkbaren Stift 41. Die versenkbaren Stifte 41 der ausgewählten Bezugspunkte PRS werden je nach den Besonderheiten des zu empfangenden Bauteils alle oder nur einige aktiviert. Die Stifte der anderen Blöcke 4 bleiben versenkt.

Die Platine 31 ist mit der Basis 33 kombiniert, die eine wabenförmige Struktur hat, deren Vertiefungen 331 den Bezugspunkten PR zugeordnet sind.

Zum Beispiel zeigt der Schnitt der Figur 3 ausgewählte Bezugspunkte PRS, da bestimmte Vertiefungen mit einem Block 4 ausgestattet sind; der linke Block 4A ist aktiviert, während der rechte Block 4E nicht aktiviert ist, wobei sein Stift 41 versenkt gelassen wird.

Die Scheibe 3 zeigt so eine doppelte Organisation von Bezugspunkten PR:
- die Gesamtheit aller allgemein möglichen Bezugspunkte, die die Kumulation aller Bezugspunkte ist, die endgültig für jede Scheibe 3 ausgewählt werden können,
- die Gesamtheit der Bezugspunkte PR für eine Palette von Bauteilen gleicher allgemeiner Form, die sich nur durch ihre Abmessungen ändern, zum Beispiel, um eine Palette von Produkten zu erzeugen, die die gleiche allgemeine Form haben; nur in dieser Untereinheit befinden sich die ausgewählten Bezugspunkte PRS für jedes Bauteil einer Palette, wie zum Beispiel ein Schuhartikel, der in eine Reihe von Größen ausgeführt wird.

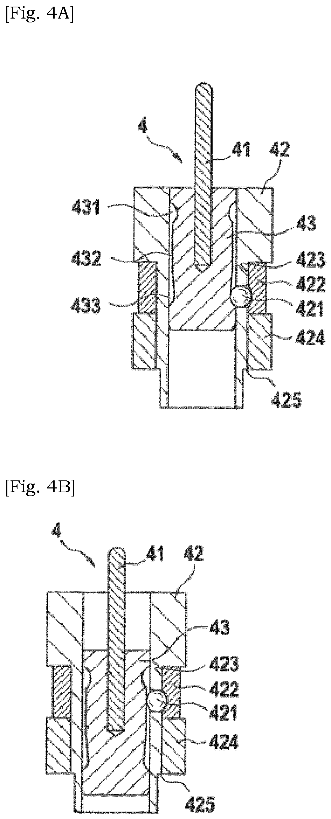

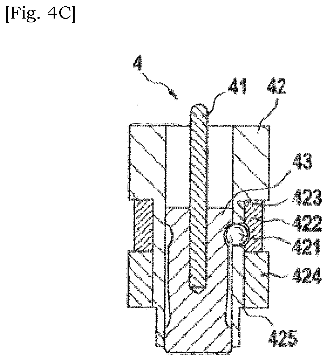

Gemäß den Figuren 4A, 4B, 4C besteht ein Block 4 aus einem Zylinder 42, der an beiden Enden offen ist und einen Kolben 43 empfängt, der mit einem Stift 41 versehen ist, der in der Achse des Kolbens vorsteht. Der Kolben 43 kann durch eine externe Einwirkung zwischen seiner aktivierten Position (Figur 4A) von der Scheibe 3 vorstehend und seiner versenkten Position (Figur 4C) und umgekehrt verschoben werden.

Die zwei Positionen werden durch ein Einklipsen definiert: Die Fläche des Kolbens 43 ist mit zwei Rillen 431, 432 versehen, und der Zylinder 42 hat ein Einklipselement 421, zum Beispiel in Form einer versenkbaren Kugel, die von einer Feder 422 angeschoben wird, um von der Oberfläche des Zylinder vorzustehen. Die Feder 422 kann aus einem elastischen Ring bestehen, der in einer Rille 423 des Zylinders untergebracht ist und so das Einklipselement 421 wie die Kugel umgibt. Es könnte ebenfalls zwei oder drei Einklipselemente in Form von Kugeln geben, die auf einem Kreis verteilt und der Einwirkung des elastischen Rings 422 ausgesetzt sind. Die den elastischen Ring 422 empfangende Rille 423 wird von einer Reduzierung des Durchmessers des Zylinders 42 gebildet, die einen Blockierring 424 empfängt, der außerdem die Schulter 425 vervollständigt.

Der Querschnitt jeder der Rillen 431, 433 und der Durchmesser der Kugel 421 entsprechen sich, so dass jede Rille sich gut auf der Kugel positionieren kann.

Jede Rille 431, 433 hat vorzugsweise einen Kreisbogenquerschnitt leicht ausgeweitet auf der Seite der anderen Rille, um eine Rampe 432 zu formen, die es dem Kolben 43 ermöglicht, die Kugel 421 progressiv zurückzuschieben, wenn der Kolben in Richtung des Ausfahrens des Stifts 41 (Figur 4A) oder seines Versenkens (Figur 4C) angeschoben wird.

Dagegen hat der andere Rand (oder Außenrand) jeder Rille 431, 433 keine Rampe und bildet so einen Endanschlag, der den Kolben 43 in dieser Richtung zurückhält und der sich nur zwischen diesen zwei Endpositionen verschieben kann.

Figur 4B zeigt eine Zwischenposition des Kolbens 43, der mit seiner Rampe 432 über die Kugel 421 geht.

Die Rillen 431, 433 und die Rampe 432 sind drehsymmetrische Formen des Kolbens 43, so dass die Ausrichtung des Kolbens 43 um seine Achse für die Zusammenwirkung mit der Kugel 421 keine Bedeutung hat.

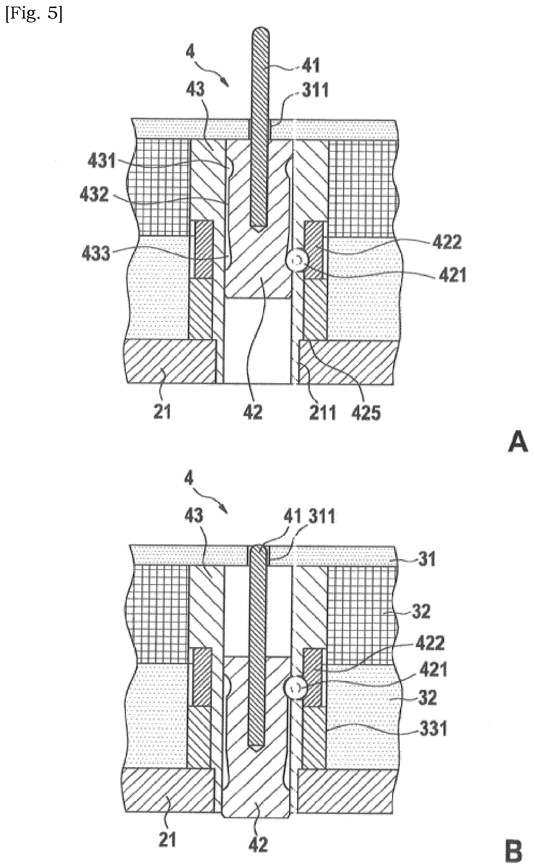

Figur 5 zeigt in ihren Teilen A und B den Einbau eines Blocks 4 in die Scheibe 3, der zwischen der Platine 31 und der Tragplatte 21 gehalten wird, die mit einer Bohrung 211 an der Stelle des Blocks 4 versehen ist. Die Bohrung 211 empfängt die Durchmesserverringerung des Zylinders 42, die die Schulter 425 bildet, die wie bereits angegeben durch den Blockierring 424 vervollständigt wird und den Zugang zum Kolben 43 erlaubt.

Der Teil B der Figur 5 zeigt auch deutlich das abgerundete, zum Beispiel kugelförmige Ende 41a des Stifts 41, das leicht, aber neutral über die Fläche der Platine 31 übersteht, damit die Bohrung 311 keinen Hohlraum, auch nicht reduziert, bildet, der die Ablagerung und das Festsetzen von Rückständen von Bearbeitungsvorgängen begünstigen könnte, die möglicherweise den Stift 1 blockieren könnten und schwer zu entfernen sind.

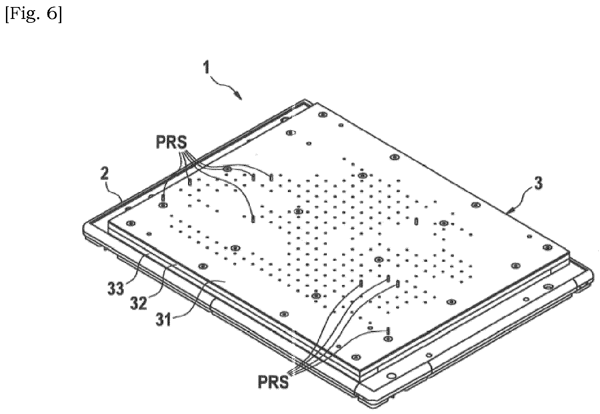

Figur 6 zeigt ein Beispiel eines Transfermoduls 1, dessen ausgewählte Bezugspunkte PRS aktiviert wurden, wobei die Stifte 41 ausgefahren wurden. Die Verteilung der Bezugspunkte PR entspricht dem in Figur 2 dargestellten Beispiel. Die Scheibe 3 ist an der Tragplatte 21 des Gestells 2 durch Schrauben 34 befestigt, die an der Oberfläche der Scheibe 3 verteilt sind, um sie fest an der Platte 21 und so am Gestell 2 zu befestigen, um zu verhindern, dass der auf die Kolben 43 der Blöcke 4 für das Ausfahren der Stifte 41 ausgeübte Schub die Scheibe 3 anhebt; diese Verteilung der Befestigungsschrauben garantiert ebenfalls die Präzision der Positionierung der Scheibe 3 in den Stationen OP1-OP3 sowie bei der Entladung und bei der Rücksetzung in der Ausgabestation PS3.

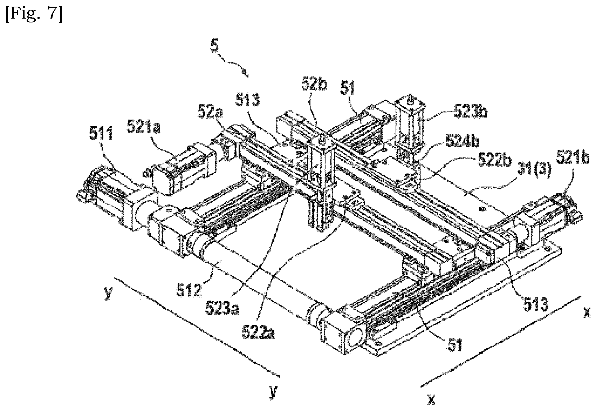

Figur 7 ist eine perspektivische Ansicht einer Aktivierungsanlage 5 der Scheibe 3 eines Moduls 1 gemäß einer Ansicht von unten; diese auf die Platine 31 begrenzte Ansicht weist zur Information ein Koordinatenachsenkreuz (XX, YY) auf. Die Anlage 5 besteht aus zwei der Richtung XX entsprechenden parallelen Längsschienen 51, auf denen eine Querschiene 52a umläuft, die der Richtung YY entspricht und die einen Querschlitten 522 trägt, der entlang dieser Schiene 52a beweglich ist. Die Längsschienen 51 umranden die Stelle, die das Transfermodul 1 empfängt, und ihre Länge ermöglicht es der Querschiene 52a, diese ganze Stelle zu überstreichen, damit der Querschlitten 522a mit seinem Stellantrieb, wie nachfolgend beschrieben, alle Bezugspunkte PR erreichen kann, die mit einem Block 4 ausgestattet sind.

Die Querschiene 52a wird in Translationsrichtung von einem Motor 511 angetrieben, dessen Ausgang eine Querwelle 512 ist, die eine ortsfeste Längsschraube (nicht dargestellt) antreibt, die in jede Längsschiene 51 integriert ist, die mit einer Mutter zusammenwirkt, die frei drehbar, aber in Translation fest mit jedem Schlitten 513 verbunden ist, der die Querschiene 52a trägt.

Das Ende der Querschiene 52a ist mit einem Motor 521 ausgestattet, der eine ortsfeste Schraube antreibt, die in der Querschiene untergebracht ist und mit einer fest mit dem Querschlitten 522a verbundenen Mutter zusammenwirkt.

Der Querschlitten 522a trägt einen Stellantrieb 523a.

Der pneumatische oder elektromechanische Stellantrieb 523a hat eine Stange 524, die in der Richtung lotrecht zur Ebene der Längsschienen 51 beweglich ist.

Gemäß der dargestellten Ausführungsform wird die Querschiene 52a mit einer anderen Querschiene 52b geteilt, die einen Querschlitten 522b unabhängig vom Schlitten 522a trägt, der auf der ersten Querschiene 52a umläuft. Diese Verdoppelung der Schlitten 522a, 522b verringert die Wege in der Richtung XX, da die Schlitten sich die Scheibe 3 in zwei Hälften teilen, dies verringert die Vorbereitungszeit eines Moduls 1.

Jeder Schlitten 522a,b wird von der Zentraleinheit UC gemäß einem Programm gesteuert, um vor den zu aktivierenden Block 4 zu kommen und den Kolben 43 des Blocks in die aktivierte Position anzuschieben und den Stift 41 von der Platine 31 vorstehen zu lassen.

Das Außerbetriebsetzen der Scheibe 3, das stromaufwärts vor der Aktivierung der Scheibe ist, d.h. das Versenken der Stifte 41, erfolgt vorzugsweise global mit einer einzigen Scheibe, die sich auf die Oberseite der Stifte 41 eines Moduls 1 anlegt und sie eindrückt, bis sie in die Platine 31 des Moduls 1 versenkt sind, das so in den Anfangszustand zurückversetzt wird.

Dann kann das Modul 1 zurückgesetzt werden, indem die Blöcke 4 aktiviert werden, die für den neuen Arbeitszyklus des Moduls 1 notwendig sind.

Die Reinigung der Scheibe 3 am Ende eines Kreises ist notwendig, damit sie für das neue Bauteil verwendbar ist, und auch um die Gefahr zu vermeiden, dass die Stifte 41 sich in den Bohrungen 311 der Platine 31 durch die Abfälle von Vorgängen blockieren, die auf der Produktionsstraße ausgeführt werden.

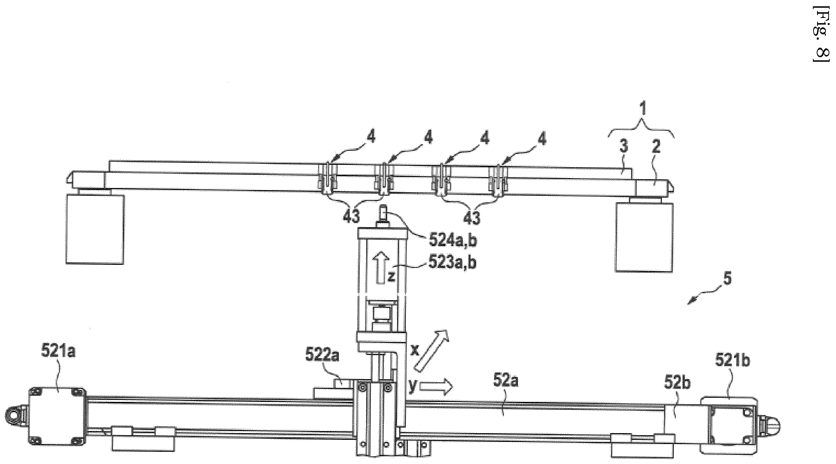

Figur 8 ist eine Vorderansicht der Aktivierungsanlage 5 der Blöcke 4 der Scheibe 1. Die Scheibe 1, von der das Produkt entfernt und die gereinigt wurde, kommt in einer präzisen Position über der Anlage 5 an, deren Darstellung auf den Teil begrenzt ist, der die Querschiene 52a,b enthält, von der ein Stellantrieb 523a,b unter einem Block 4 positioniert ist, um von der Stange 524a,b aktiviert zu werden, die den Kolben anschiebt, um den Stift 41 auszufahren.

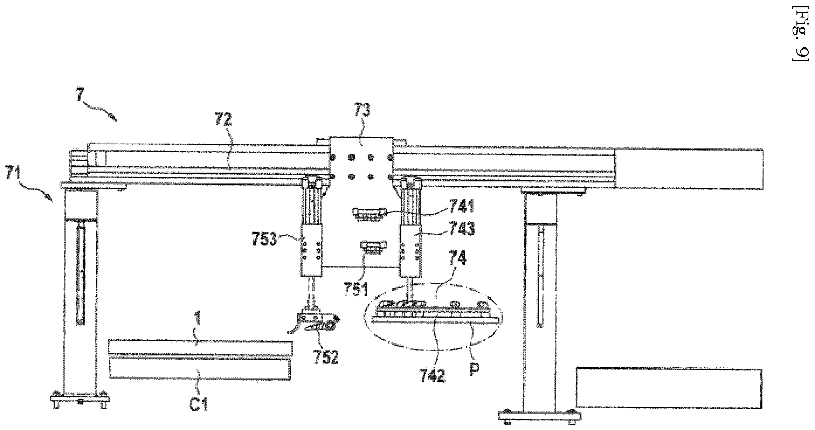

Figur 9 ist eine schematische Ansicht der Ausgabestation 7 des Produkts P, das durch ein flaches Element dargestellt ist.

Die Ausgabestation 7 entspricht der Entladestation PS1 und der Reinigungsstation PS2, die in Figur 1 dargestellt sind.

Die Station 7 ist ein Portalrahmen mit einer Schiene 72, die den Schlitten 73 führt, der mit einer Greifvorrichtung 74 und mit einer Reinigungsvorrichtung 75 ausgestattet ist, die je einem Verteiler 741, 751 zugeordnet sind, der den Unterdruck bzw. den Druck an den Kopf mit Saugnäpfen 742 der Greifvorrichtung 74, der mit Unterdruck arbeitet, und den Druck an die Reinigungsdüse 752 der Reinigungsvorrichtung 75 liefert.

Der Greifkopf 742 wird von einem Arbeitszylinder 743 getragen, der seine senkrechte Bewegung steuert; die Luftdüse 742 wird von einem Arbeitszylinder 753 getragen, der die senkrechte Bewegung des Schlittens 73 steuert, der sich zuerst auf dem Greifkopf 742 über der Scheibe 1 positioniert und dann das Produkt P nimmt und sich nach rechts verschiebt, während die Luftdüse 752 auf die Scheibe 1 absinkt und sie mit einem Luftstrom überstreicht, indem sie die Platte 3 quer durchquert, um in der dargestellten Position anzukommen. Der Greifkopf 742 gibt dann das Produkt frei.

Die so gereinigte Scheibe 1 kann durch das Versenken aller ihrer Stifte 41 außer Betrieb gesetzt werden und dann in die Rücksetzstation PS3 übergehen, die mit der Anlage 5 der Figur 9 ausgestattet ist.

Die Erfindung betrifft so eine Produktfertigungsanlage, die eine Produktionsstraße mit Arbeitsstationen und Fördereinrichtungen enthält, die zwischen den Stationen umlaufen und die in den Stationen zu verarbeitenden Bauteile tragen, dadurch gekennzeichnet, dass sie Transfermodule 1 wie oben beschrieben enthält, um die Bauteile zwischen den verschiedenen Stationen OP1-OP3, PC, PS der Produktionsstraße LP zu transferieren.

### Verzeichnis der Hauptelemente

LP Produktionsstraße
P Produkt
C1-C4 Fördereinrichtung
OP1-OP3 betriebsbereite Station
PS Ausgabestation
PS1 Entladestation
PS2 Reinigungsstation
PS3 Rücksetzstation
PC Ladestation
PR Bezugspunkt
PRS ausgewählter Bezugspunkt
UC Zentraleinheit
1 Modul
2 Gestell
21 Tragplatte
211 Bohrung
22 Gleitstück
3 Scheibe
31 Platine
311 Bohrung
32 wärmeisolierende Zwischenplatte
33 Basis (wabenförmige Basis)
331 Vertiefung
34 Befestigungsschraube
4 Block
41 Stift
41a abgerundetes Ende
42 Zylinder
421 Kugel, Einklipselement
422 Feder, elastischer Ring
423 Rille
424 Blockierring
425 Schulter
43 Kolben
431 Versenkrille
432 Rampe
433 Ausfahrrille
5 Aktivierungsanlage einer Scheibe
51 Längsschiene
511 Motor
512 Querwelle
513 Längsschlitten
52a,b Querschiene
521a Motor
522a Querschlitten
522b Querschlitten
523a Stellantrieb
523b Stellantrieb
524 Stange des Stellantriebs
524b Stange des Stellantriebs
53 Reinigungsvorrichtung
6 Platte zum Außerbetriebsetzen der Stifte einer Platte
7 Entnahme- und Reinigungsstation
71 Portalrahmen
72 Schiene
73 Schlitten
74 Greifvorrichtung
741 Verteiler
742 Greifkopf
743 Arbeitszylinder
751 Verteiler
752 Luftdüse
753 Arbeitszylinder

## Patentansprüche

1. Transfermodul (1) für Bauteile, die durch Stifte auf dem Modul in Position gehalten werden und in einer Produktionsstraße (LP) umlaufen, die mit Arbeitsstationen ausgestattet ist, wobei
das Modul (1) ein passives Modul ist, das ein Gestell (2) aufweist, das mit einer Fördereinrichtung kompatibel ist und eine Scheibe (3) trägt, die mit Bezugspositionen (PR) versehen ist, von denen mindestens bestimmte mit versenkbaren Stiften (41) ausgestattet sind, die zwischen einer unter die Oberfläche der Scheibe (3) versenkten Position und einer von der Scheibe (3) vorstehend ausgefahrenen Position beweglich sind, um das auf der Scheibe (3) zu haltende Bauteil zu empfangen, wobei
die Scheibe (3) von einer Platine (31), die mit Bohrungen (311) an den Bezugspositionen (PR) versehen ist, und einer wabenförmigen Basis (33) gebildet wird, deren Vertiefungen (331) den Bohrungen (311) der Bezugspositionen (PR) der Platine (31) entsprechen, wobei ausgewählte Vertiefungen (331) versenkbare Stifte (41) aufweisen, die in die Bohrungen (311) der Platine (31) eingeführt sind, und
der versenkbare Stift (41) in einen Block (4) eingebaut ist, der in einer Vertiefung (331) der Basis (33) der Scheibe (3) untergebracht ist, und der Block (4) von einer Tragplatte des Gestells gehalten wird, die mit Bohrungen oder Öffnungen versehen ist, die es ermöglichen, auf einen Kolben des in der Vertiefung platzierten Blocks zuzugreifen, und
wobei der Block (4) ein Zylinder (42) ist, der einen mit einem Stift (41) versehenen Kolben (43) aufnimmt, wobei der Kolben (43) zwischen einer ersten und einer zweiten Position im Zylinder (42) beweglich ist, mit Rückhalt in jeder Position durch eine Haltevorrichtung (421, 431, 432, 433),
**dadurch gekennzeichnet, dass**
die Haltevorrichtung (421, 431, 432, 433) eine Einklipsvorrichtung ist, um mit dem Kolben (43) in seiner versenkten Position oder in seiner zurückgezogenen Position zusammenzuwirken.

2. Transfermodul (1) nach Anspruch 1,
**dadurch gekennzeichnet, dass**
die Bezugspositionen (PR) gemäß einem Gitter mit Koordinaten verteilt sind, die jede Position und ihre mögliche Besetzung durch einen versenkbaren Stift (41) markieren.

3. Transfermodul (1) nach Anspruch 1,
**dadurch gekennzeichnet, dass**
die Einklipsvorrichtung aus einer Kugel (421) kombiniert mit einer Feder (422) und aus zwei Rillen (431, 433) in der Oberfläche des Zylinders (42) besteht, wobei diese Rillen jeweils der einen oder anderen Position des Kolbens (43) zugeordnet sind, wobei die Feder (422) die Kugel (421) in Vorsprung von der Fläche des Zylinders anschiebt, um in die Rille (431, 433) des Kolbens (43) zu kommen, der vor der Kugel (421) angekommen ist, wobei diese Kugel unter der Wirkung eines vom Kolben (43) auf die Kugel (421) ausgeübten Schubs zurückgeschoben werden kann, um sich hinter die Fläche des Zylinders zu versenken, und die Feder (422) komprimiert und die Freigabe des Kolbens (42) ermöglicht.

4. Transfermodul (1) nach einem der vorhergehenden Ansprüche, **dadurch gekennzeichnet, dass**
die Platine (31) eine Stahlplatte ist, deren Oberseite nicht reflektierend ist und die durch eine wärmeisolierende Platte (32) von der Basis (33) getrennt wird.

5. Produktfertigungsanlage, die eine Produktionsstraße mit Arbeitsstationen und Fördereinrichtungen enthält, die zwischen den Stationen umlaufen und die in den Stationen zu verarbeitenden Bauteile tragen, wobei die Anlage **dadurch gekennzeichnet ist, dass** sie Transfermodule (1) nach einem der Ansprüche 1 bis 4 zum Transferieren der Bauteile zwischen den verschiedenen Stationen (OP1-OP3, PC, PS) der Produktionsstraße (LP) enthält.

6. Anlage nach Anspruch 5,
**dadurch gekennzeichnet, dass** sie
eine Verwaltungseinheit (UC) enthält, die die Bewegung der Fördereinrichtungen (C1-C4) und die in den Stationen (OP1-OP3, PC, PS) gemäß einem vordefinierten Programm ausgeführten Vorgänge steuert.

7. Anlage nach Anspruch 5,
**dadurch gekennzeichnet, dass** sie
eine Aktivierungsvorrichtung (5) des Transfermoduls (1) zum Betätigen des Blocks (4) und Ausfahren seines Stifts (41) entsprechend dem auf dem Modul (1) zu empfangenden Bauteil enthält.

8. Anlage nach Anspruch 7,
**dadurch gekennzeichnet, dass**
die Aktivierungsvorrichtung (5) aus zwei Längsschienen (51) besteht, die eine Empfangsstelle einer Scheibe (3) umranden und eine Querschiene (52a,b) tragen, die mit einem Querschlitten (522a,b) versehen ist, der mit einem Stellantrieb (523a,b) ausgestattet ist, um an die Position eines ausgewählten Bezugspunkts (PRS) zu kommen, um seinen Kolben (43) anzuschieben und den Stift (41) des Blocks (4) dieses ausgewählten Bezugspunkts (PRS) auszufahren.

9. Anlage nach Anspruch 8,
**dadurch gekennzeichnet, dass**
die Querschiene (52a,b) von zwei Längsschlitten (513) getragen wird, die auf den Längsschienen (51) durch ein Schraube-Mutter-Getriebe synchron angetrieben werden, das jedem Schlitten (513) und seiner Längsschiene zugeordnet ist und von einem Motor (511) und eine Querwelle (512) angetrieben wird, die mit den zwei Schrauben verbunden ist,
wobei der Querschlitten (522a,b) von einem Schraube-Mutter-Getriebe angetrieben wird, das in die Querschiene (52a,b) integriert ist und von einem Motor (521a,b) betätigt wird, der von der Querschiene (52a,b) getragen wird

10. Anlage nach Anspruch 5,
**dadurch gekennzeichnet, dass**
sie eine Ausgabestation (PS) enthält, die aus einer Entnahme- und Reinigungsstation (7) besteht, die einen Portalrahmen (71) mit einer Schiene (72) hat, die das in der Ausgabestation (PS) angekommene Transfermodul (1) überdeckt und mit einem Schlitten (73) versehen ist, der mit einer Greifvorrichtung (74) stromaufwärts und mit einer Reinigungsvorrichtung (75) stromabwärts ausgestattet ist, um die Greifvorrichtung (74) über dem Transfermodul (1) zu platzieren und das Produkt (P) zu entnehmen, und sich dann zu verschieben, um das Produkt (P) hinauszuschaffen und gleichzeitig die Reinigungsvorrichtung (75) bei ihrem Durchgang über dem leeren Transfermodul (1) zu aktivieren, um es zu reinigen.

11. Anlage nach Anspruch 10,
**dadurch gekennzeichnet, dass**
die Greifvorrichtung (74) einen Greifkopf (742) mit mit Unterdruck versorgten Saugnäpfen aufweist und die Reinigungsvorrichtung (75) eine mit Druckluft versorgte Luftdüse (752) enthält.

12. Anlage nach Anspruch 5,
**dadurch gekennzeichnet, dass** sie
eine Vorrichtung zum Versetzen in den Anfangszustand, um die ausgefahrenen Stifte (41) der Scheibe (3) zu versenken, enthält, wobei diese Vorrichtung aus einer Platte besteht, um alle Stifte (41) einer Scheibe bis in die Ebene der Oberseite der Scheibe (3) des Transfermoduls (1) zurückzuschieben.

## Claims

1. Transfer module (1) for components which are held in position by pins on the module and circulate in a production line (LP) equipped with working stations, wherein the module (1) is a passive module comprising a frame (2) compatible with a conveying device and carrying a disc (3) provided with reference positions (PR), of which at least some are equipped with retractable pins (41) movable between a position retracted below the surface of the disc (3) and an extended position projecting from the disc (3), in order to receive the component to be held on the disc (3),
wherein the disc (3) is formed by a plate (31) provided with holes (311) at the reference positions (PR) and by a honeycomb base (33), the recesses (331) of which correspond to the holes (311) of the reference positions (PR) of the plate (31), wherein selected recesses (331) comprise retractable pins (41) which are inserted into the holes (311) in the plate (31), and
wherein the retractable pin (41) is integrated in a block (4) which is accommodated in a recess (331) in the base (33) of the disc (3), and the block (4) is held by the support plate of the frame, which is provided with holes or openings allowing access to a piston of the block, which is positioned in the recess, and
wherein the block (4) is a cylinder (42) which receives a piston (43) provided with a pin (41), wherein the piston (43) is movable in the cylinder (42) between a first and a second position, with retention in each position by a retaining device (421, 431, 432, 433),
**characterized in that**
the retaining device (421, 431, 432, 433) is a clipping device configured to interact with the piston (43) in its retracted position or in its withdrawn position.

2. Transfer module (1) according to Claim 1,
**characterized in that**
the reference positions (PR) are distributed according to a grid with coordinates which define each position and its possible occupation by a retractable pin (41).

3. Transfer module (1) according to Claim 1,
**characterized in that**
the clipping device comprises a ball (421) combined with a spring (422) and two grooves (431, 433) in the surface of the cylinder (42), wherein these grooves are associated with one or the other position of the piston (43), wherein the spring (422) biases the ball (421) into a position projecting from the surface of the cylinder, in order to enter the groove (431, 433) of the piston (43) which is aligned with the ball (421), wherein the ball can be pushed back under the effect of a force exerted by the piston (43) on the ball (421), so as to retract behind the surface of the cylinder, compressing the spring (422) and enabling release of the piston (42).

4. Transfer module (1) according to any one of the preceding claims,
**characterized in that**
the plate (31) is a steel plate, the surface of which is non-reflective and which is separated from the base (33) by a heat-insulating plate (32).

5. Product manufacturing installation comprising a production line with working stations and conveying devices which circulate between the stations and carry the components to be processed in the stations, wherein the installation is **characterized in that**
it comprises transfer modules (1) according to one of Claims 1 to 4 for transferring the components between the various stations (OP1-OP3, PC, PS) of the production line (LP).

6. Installation according to Claim 5,
**characterized in that**
it comprises a control unit (UC) which controls the movement of the conveying devices (C1-C4) and the operations carried out in the stations (OP1-OP3, PC, PS) according to a predefined programme.

7. Installation according to Claim 5,
**characterized in that**
it comprises an activation device (5) of the transfer module (1) for actuating the block (4) and extending its pin (41) according to the component to be received on the module (1).

8. Installation according to Claim 7,
**characterized in that**
the activation device (5) comprises two longitudinal rails (51) which border a receiving location for a disc (3) and carry a transverse rail (52a,b) provided with a transverse carriage (522a,b) equipped with an actuating drive (523a,b), in order to move to the position of a selected reference point (PRS) so as to push its piston (43) and extend the pin (41) of the block (4) at this selected reference point (PRS).

9. Installation according to Claim 8,
**characterized in that**
the transverse rail (52a,b) is supported by two longitudinal carriages (513) which are driven synchronously on the longitudinal rails (51) by a screw-and-nut mechanism associated with each carriage (513) and its longitudinal rail and driven by a motor (511) and a transverse shaft (512) connected to the two screws,
wherein the transverse carriage (522a,b) is driven by a screw-and-nut mechanism integrated into the transverse rail (52a,b) and actuated by a motor (521a,b) carried by the transverse rail (52a,b).

10. Installation according to Claim 5,
**characterized in that**
it comprises an output station (PS) consisting of a removal and cleaning station (7) which comprises a portal frame (71) having a rail (72) which overhangs the transfer module (1) that has arrived in the output station (PS) and which is provided with a carriage (73) equipped with a gripping device (74) upstream and a cleaning device (75) downstream, in order to position the gripping device (74) above the transfer module (1) and remove the product (P), and then to move in order to discharge the product (P) while simultaneously activating the cleaning device (75) during its passage over the empty transfer module (1), in order to clean it.

11. Installation according to Claim 10,
**characterized in that**
the gripping device (74) comprises a gripping head (742) with suction cups supplied with negative pressure, and the cleaning device (75) comprises an air nozzle (752) supplied with compressed air.

12. Installation according to Claim 5,
**characterized in that**
it comprises a device for resetting to an initial state, in order to retract the extended pins (41) of the disc (3), wherein this device consists of a plate configured to push all the pins (41) of a disc back to the plane of the upper surface of the disc (3) of the transfer module (1).

## Revendications

1. Module de transfert (1) pour des composants maintenus en position par des broches sur le module et circulant dans une ligne de production (LP) équipée de stations de travail, où
le module (1) est un module passif comprenant un bâti (2) compatible avec un appareil de convoyage et portant un disque (3) muni de positions de référence (PR), dont au moins certaines sont équipées de broches escamotables (41), mobiles entre une position escamotée sous la surface du disque (3) et une position déployée faisant saillie par rapport au disque (3), afin de recevoir le composant à maintenir sur le disque (3), où
le disque (3) est formé d'une platine (31) munie de perçages (311) aux positions de référence (PR) et d'une base de forme alvéolaire (33), dont les évidements (331) correspondent aux perçages (311) des positions de référence (PR) de la platine (31), où des évidements (331) sélectionnés comportent des broches escamotables (41) introduites dans les perçages (311) de la platine (31), et
la broche escamotable (41) est montée dans un bloc (4) logé dans un évidement (331) de la base (33) du disque (3), et le bloc (4) est maintenu par une plaque de support du bâti, laquelle est munie de perçages ou d'ouvertures permettant d'accéder à un piston du bloc placé dans l'évidement, et
où le bloc (4) est un cylindre (42) recevant un piston (43) muni d'une broche (41), où le piston (43) est mobile entre une première et une deuxième position dans le cylindre (42), avec maintien dans chaque position par un dispositif de retenue (421, 431, 432, 433),
**caractérisé en ce que**
le dispositif de retenue (421, 431, 432, 433) est un dispositif d'encliquetage destiné à coopérer avec le piston (43) dans sa position escamotée ou dans sa position rétractée.

2. Module de transfert (1) selon la revendication 1,
**caractérisé en ce que**
les positions de référence (PR) sont réparties selon une grille à coordonnées marquant chaque position et son éventuelle occupation par une broche escamotable (41).

3. Module de transfert (1) selon la revendication 1,
**caractérisé en ce que**
le dispositif d'encliquetage est constitué d'une bille (421) combinée à un ressort (422) et de deux rainures (431, 433) dans la surface du cylindre (42), ces rainures étant respectivement associées à l'une ou l'autre position du piston (43), où le ressort (422) pousse la bille (421) en saillie par rapport à la surface du cylindre afin de venir dans la rainure (431, 433) du piston (43) arrivée en regard de la bille (421), où ladite bille peut être repoussée sous l'effet d'une poussée exercée par le piston (43) sur la bille (421), afin de s'escamoter sous la surface du cylindre, le ressort (422) étant comprimé et permettant la libération du piston (42).

4. Module de transfert (1) selon l'une quelconque des revendications précédentes,
**caractérisé en ce que**
la platine (31) est une plaque en acier dont le côté supérieur est non réfléchissant et qui est séparée de la base (33) par une plaque isolante thermique (32).

5. Installation de fabrication de produits comprenant une ligne de production avec des stations de travail et des appareils de convoyage circulant entre les stations et portant les composants à traiter dans les stations,
où l'installation est **caractérisée en ce qu'**elle
comprend des modules de transfert (1) selon l'une quelconque des revendications 1 à 4 pour transférer les composants entre les différentes stations (OP1-OP3, PC, PS) de la ligne de production (LP).

6. Installation selon la revendication 5,
**caractérisée en ce qu'**elle
comprend une unité de commande (UC) qui commande le mouvement des appareils de convoyage (C1-C4) et les opérations exécutées dans les stations (OP1-OP3, PC, PS) selon un programme prédéfini.

7. Installation selon la revendication 5,
**caractérisée en ce qu'**elle
comprend un dispositif d'activation (5) du module de transfert (1) destiné à actionner le bloc (4) et à déployer sa broche (41) en fonction du composant à recevoir sur le module (1).

8. Installation selon la revendication 7,
**caractérisé en ce que**
le dispositif d'activation (5) est constitué de deux rails longitudinaux (51) qui délimitent un emplacement de réception d'un disque (3) et portent un rail transversal (52a, b) muni d'un chariot transversal (522a, b) équipé d'un actionneur (523a, b), afin d'atteindre la position d'un point de référence sélectionné (PRS) pour pousser son piston (43) et déployer la broche (41) du bloc (4) de ce point de référence sélectionné (PRS).

9. Installation selon la revendication 8,
**caractérisé en ce que**
le rail transversal (52a, b) est porté par deux chariots longitudinaux (513) qui sont entraînés de manière synchrone sur les rails longitudinaux (51) par un mécanisme vis-écrou associé à chaque chariot (513) et à son rail longitudinal et entraîné par un moteur (511) et un arbre transversal (512) relié aux deux vis,
où le chariot transversal (522a, b) est entraîné par un mécanisme vis-écrou intégré dans le rail transversal (52a, b) et actionné par un moteur (521a, b) porté par le rail transversal (52a, b).

10. Installation selon la revendication 5,
**caractérisé en ce que**
elle comprend une station de sortie (PS) constituée d'une station de prélèvement et de nettoyage (7) comprenant un portique (71) muni d'un rail (72) qui surplombe le module de transfert (1) arrivé dans la station de sortie (PS) et équipé d'un chariot (73) pourvu, en amont, d'un dispositif de préhension (74) et, en aval, d'un dispositif de nettoyage (75), afin de positionner le dispositif de préhension (74) au-dessus du module de transfert (1) et de prélever le produit (P), puis de se déplacer pour évacuer le produit (P) tout en activant le dispositif de nettoyage (75) lors de son passage au-dessus du module de transfert (1) vide afin de le nettoyer.

11. Installation selon la revendication 10,
**caractérisé en ce que**
le dispositif de préhension (74) comprend une tête de préhension (742) munie de ventouses alimentées en dépression et où le dispositif de nettoyage (75) comprend une buse d'air alimentée en air comprimé (752).

12. Installation selon la revendication 5,
**caractérisé en ce que**
elle comprend un dispositif de remise en état initial destiné à escamoter les broches (41) déployées du disque (3), ce dispositif étant constitué d'une plaque destinée à repousser toutes les broches (41) d'un disque jusqu'au plan du côté supérieur du disque (3) du module de transfert (1).
